# EUROPEAN PATENT APPLICATION

(11) **EP 4 462 530 A1**
(43) Date of publication of application: **13.11.2024**
(21) Application number: 23737395.6
(22) Date of filing: 05.01.2023
(51) Int. Cl.: H01M 10/04, B65H 19/18

(54) **ELECTRODE CONNECTION DEVICE**

(30) Priority: 06.01.2022 KR 20220001882
(71) Applicant: LG Energy Solution, Ltd., Seoul 07335 (KR)
(72) Inventor: CHOI, Woo Jung, Daejeon 34122 (KR); CHAE, Seung Hyeun, Daejeon 34122 (KR); JUNG, Hyung Mook, Daejeon 34122 (KR); WANG, Hee Seung, Daejeon 34122 (KR)
(74) Representative: Goddar, Heinz J.
(86) International application number: PCT/KR2023/000198
(87) International publication number: WO 2023/132647

(57) **Abstract**

The present application relates to an electrode connection device and an electrode connection method using the same. In a process of connecting first and second electrodes, the electrode connection device of the present application and the electrode connection method using the same can suppress breakage occurrences, and thus exhibit excellent operation rates and yields, by accurately aligning the electrodes without any distortion therewith.

## Description

### Technical Field

The present application relates to an electrode connection device and an electrode connection method using the same.

### Background Art

In general, a secondary battery refers to a battery capable of converting chemical energy into electrical energy to emit it, and conversely, storing it again in the form of chemical energy when the electrical energy is supplied in a discharged state, that is, a battery capable of alternately repeating charging and discharging.

When the electric energy is emitted, the electrode returns to the previous state and repeats the state change. The secondary batteries are commonly referred to as storage batteries or accumulators because they can store electrical energy, and the currently widely-used secondary batteries include lead-acid batteries using sulfuric acid as an electrolyte, nickel-hydrogen batteries using potassium hydroxide as an electrolyte, lithium-ion batteries using a lithium salt solution as an electrolyte, and the like.

Such a secondary battery is manufactured through an electrode process, an assembly process, and an activation process. At this time, in the assembly process, specifically, a notching process, a lamination process, a stacking and folding process, and a packaging process are sequentially performed.

In the process of automatically connecting a waiting electrode and a traveling electrode during the notching process, a phenomenon that the alignment sate is distorted has occurred, when the traveling electrode with meandering is inserted, a traveling roller is twisted to cause meandering during the traveling, or the waiting electrode has been connected to an electrode seating part in an oblique line due to a worker's mistake upon manual preparation of the waiting electrode. As a result, the electrode breakage is induced, so that there has been a problem that operation rates and yields are lowered.

To solve this problem, in a state where the traveling electrode is supplied from a traveling electrode supply part and seated in a traveling electrode seating part before connecting the waiting electrode and the traveling electrode, various sensors such as an EPC (Edge Position Control) sensor have been disposed between the traveling electrode supply part and the traveling electrode seating part to confirm an alignment state of the traveling electrode, that is, the meandering degree of the traveling electrode line, and the traveling electrode supply part has been moved to the Y-axis to align the waiting electrode and the traveling electrode. However, when checking the alignment state using various sensors such as the EPC sensor, the EPC sensor is located between the traveling electrode seating part and the traveling electrode supply part to check the Y-axis meandering of the traveling electrode, so that when the electrode from the position of the EPC sensor up to the traveling electrode seating part is not positioned on a straight line, there has been a problem that the waiting electrode and the traveling electrode are not aligned when the electrodes are connected.

Therefore, an electrode connection device for solving these problems is required.

### Disclosure

### Technical Problem

It is an object of the present application to provide an electrode connection device capable of connecting a waiting electrode and a traveling electrode in a state where the electrodes are accurately aligned without distortion in a connection process of the waiting electrode and the traveling electrode, and an electrode connection method using the same.

### Technical Solution

In order to solve the above problems, the electrode connection device of the present application comprises: a first electrode supply part supplying a first electrode; a second electrode supply part supplying a second electrode replacing the first electrode to the first electrode supply part when the supply of the first electrode is exhausted below a certain level; a photographing part photographing images of a connection target region of the first electrode and a connection target region of the second electrode; an aligning part aligning the connection target region of the first electrode and the connection target region of the second electrode based on the photographed images; and a connection part connecting the aligned connection target regions of the first and second electrodes.

Also, the connection target regions of the first and second electrodes may each comprise a patterned portion and an unpatterned portion, and the photographing part may photograph images of a first boundary area between the patterned portion and the unpatterned portion of the first electrode and a second boundary area between the patterned portion and the unpatterned portion of the second electrode.

The aligning part may adjust the positions of the first and second electrodes so that the first boundary area and the second boundary area are placed on the same line.

In addition, the aligning part may comprise: a first electrode seating part having a first seating surface on which the connection target region of the first electrode is seated; a second electrode seating part disposed apart from the first electrode seating part by a predetermined interval and having a second seating surface on which the connection target region of the second electrode is seated and which is disposed to face the first seating surface; and a position adjustment part adjusting positions of the first and second electrode seating parts.

Furthermore, the photographing part may comprise: a prism mirror positioned in a gap between the first electrode seating part and the second electrode seating part; a first light source part for irradiating the prism mirror with light to irradiate the connection target region of the first electrode with the reflected light; a second light source part for irradiating the prism mirror with light to irradiate the connection target region of the second electrode with the reflected light; and a camera simultaneously photographing the connection target regions of the first and second electrodes irradiated with the reflected light.

Also, the first seating surface comprises a first adsorption area adsorbing the connection target region of the first electrode and a non-adsorption area, and the second seating surface comprises a second adsorption area adsorbing the connection target region of the second electrode, wherein in a state where the first seating surface and the second seating surface are in contact with each other, the non-adsorption area and the second absorption area may be formed at positions corresponding to each other.

In addition, it may comprise a cutting part that when the supply of the first electrode is exhausted below a certain level, the first electrode is cut along a preset cutting line to form the connection target region of the first electrode.

Furthermore, the connection target region of the first electrode formed after cutting may be adsorbed to the first adsorption area.

Also, the cut portion of the adsorbed connection target region of the first electrode may be positioned in the boundary area between the first adsorption area and the non-adsorption area in the first seating surface.

In addition, when the first boundary area and the second boundary area are placed on the same line, the connection part may move the first and second electrode seating parts so that the first and second seating surfaces come into close contact with each other.

Furthermore, the connection target region of the first electrode and the connection target region of the second electrode may be connected via an adhesive member while the first and second seating surfaces come in close contact with each other.

Also, the first and second electrodes may be positive electrodes or negative electrodes equally.

In addition, the electrode connection method using the above-described electrode connection device comprises steps of: photographing images of the connection target region of the first electrode and the connection target region of the second electrode for replacing the first electrode; aligning the connection target region of the first electrode and the connection target region of the second electrode based on the photographed images; and connecting the aligned connection target regions of the first and second electrodes.

Furthermore, the electrode connection method of the present application uses the electrode connection device.

### Advantageous Effects

The present application relates to an electrode connection device and an electrode connection method using the same. In a process of connecting a waiting electrode and a traveling electrode, the electrode connection device of the present application and the electrode connection method using the same can suppress breakage occurrences, and thus exhibit excellent operation rates and yields, by accurately aligning the electrodes without distortion.

### Description of Drawings

Figure 1 is a diagram illustratively showing an electrode connection device according to one example of the present application.
Figure 2 is an exemplary diagram showing in detail a constitution of an aligning part of an electrode connection device according to one example of the present application.
Figure 3 is a diagram illustratively showing a first electrode seating part, a second electrode seating part, and a photographing part of an electrode connection device according to one example of the present application.
Figure 4 is a diagram illustratively showing a state, in which a first electrode is seated on a first seating surface, according to one example of the present application.
Figure 5 is a diagram illustratively showing a state, in which a second electrode is seated on a second seating surface, according to one example of the present application.
Figure 6 is a diagram illustratively showing a state where the aligned first and second electrodes are connected.

### Best Mode

Hereinafter, the electrode connection device of the present application will be described with reference to the accompanying drawings, and the accompanying drawings are illustrative, and the electrode connection device of the present application is not limited to the accompanying drawings.

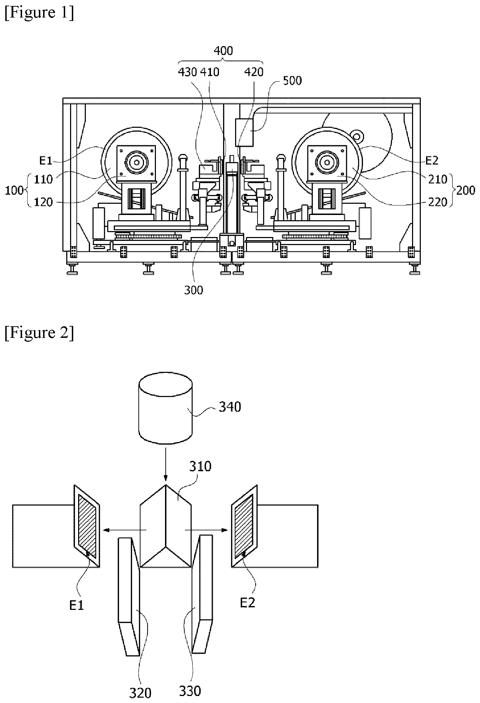

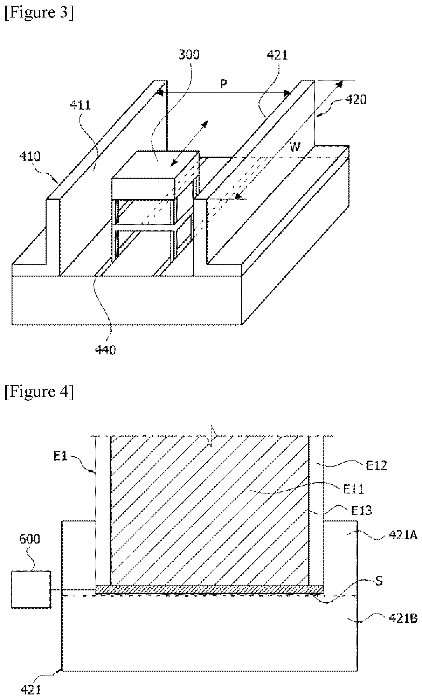

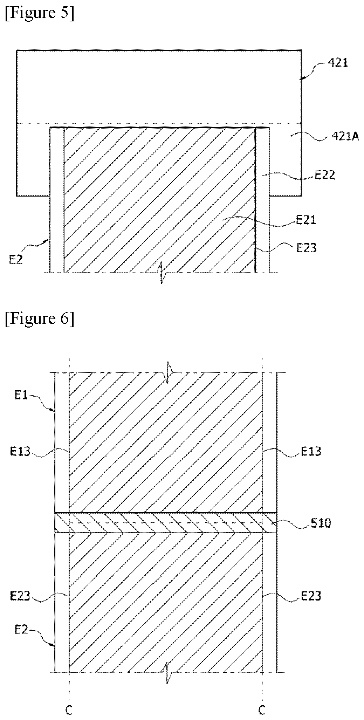

Figure 1 is a diagram illustratively showing an electrode connection device according to one example of the present application; Figure 2 is an exemplary diagram showing in detail a constitution of an aligning part of an electrode connection device according to one example of the present application; Figure 3 is a diagram illustratively showing a first electrode seating part, a second electrode seating part, and a photographing part of an electrode connection device according to one example of the present application; Figure 4 is a diagram illustratively showing a state, in which a first electrode is seated on a first seating surface, according to one example of the present application; Figure 5 is a diagram illustratively showing a state, in which a second electrode is seated on a second seating surface, according to one example of the present application; and Figure 6 is a diagram illustratively showing a state where the aligned first and second electrodes are connected.

Referring to the drawings, the electrode connection device of the present application comprises a first electrode supply part (100), a second electrode supply part (200), a photographing part (300), an aligning part (400), and a connection part (500).

The first electrode supply part (100) supplies the first electrode (E1). The first electrode (E1) may be a traveling electrode. The first electrode supply part (100) may comprise a first winding roll (110) on which the first electrode (E1) is wound and a first unwinding part (120) unwinding the first electrode (E1). The first unwinding part (120) may comprise a drive servomotor, and may be operated in a jog mode to unwind the first electrode (E1) to the first electrode seating part (410) to be described below.

The second electrode supply part (200) supplies the second electrode (E2) replacing the first electrode (E1) to the first electrode supply part (100) when the supply of the first electrode (E1) is exhausted below a certain level. The second electrode supply part (200) may comprise a second winding roll (210) on which the second electrode (E2) is wound and a second unwinding part (220) unwinding the second electrode (E2). The second unwinding part (220) may comprise a drive servomotor, and may be operated in a jog mode to unwind the second electrode (E2) to the second electrode seating part (420) to be described below.

The second electrode (E2) may be a waiting electrode. The traveling electrode means an electrode that is unwound and used earlier than the waiting electrode. The waiting electrode means an electrode which is connected to the traveling electrode and waits to automatically be replaceable therewith immediately, when the traveling electrode is unwound and exhausted.

The photographing part (300) photographs images of the connection target region to the first electrode (E1) and the connection target region to the second electrode (E2). The connection target regions of the first and second electrodes (E2) may be the ends to be unwound, but are not limited thereto, and if the cutting is made during unwinding, the cut portion may be the connection target region. A detailed description of the aligning method will be described below.

The aligning part (400) aligns the connection target region of the first electrode (E1) and the connection target region of the second electrode (E2) based on the photographed images. As the aligning part (400) aligns the connection target regions of the first electrode (E1) and the second electrode (E2) based on the photographed images, hereinafter, it is possible to prevent the distortion of the electrodes during the connection process of the connecting part (500).

The connection part (500) connects the connection target regions of the aligned first and second electrodes (E1, E2). As the connection part (500) connects the connection target regions of the first and second electrodes (E1, E2), the first electrode (E1) supplied from the first electrode supply part (100) and exhausted may be replaced with the second electrode (E2). That is, after the first electrode (E1) is exhausted in the first electrode supply part (100), the second electrode (E2) connected to the first electrode (E1) may be supplied.

According to the electrode connection device of the present application, images of the connection target regions of the first and second electrodes (E1, E2) are photographed in advance prior to connecting the first and second electrodes (E1, E2), and the connection target regions of the first and second electrodes (E1, E2) are aligned based on the photographed images, so that it is possible to accurately connect the electrodes without distortion therebetween during the connection process, whereby the breakage occurrences can be suppressed while the electrodes are continuously supplied, and thus excellent operation rates and yields can be exhibited.

In one example, the connection target regions of the first and second electrodes (E1, E2) may each comprise patterned portions (E11, E21) and unpatterned portions (E12, E22), and the photographing part (300) may photograph images of a first boundary area (E13) between the patterned portion (E11) and the unpatterned portion (E12) of the first electrode and a second boundary area (E23) between the patterned portion (E21) and the unpatterned portion (E22) of the second electrode (E2). The first boundary area (E13) may be a boundary line between the patterned portion (E11) and the unpatterned portion (E12) formed along the longitudinal direction (or unwinding direction) of the first electrode (E1). The second boundary area (E23) may also be a boundary line between the patterned portion (E21) and the unpatterned portion (E22) formed along the longitudinal direction (or unwinding direction) of the second electrode (E2). In the present application, the alignment state may mean a state where the first and second boundary areas (E13, E23) coincide, and the coincident first and second boundary areas (E13, E23) are placed on the same line (C) (see Figure 6). The patterned portion means a portion coated with a slurry representing polarity on a current collector included in an electrode, and the unpatterned portion means a portion where an electrode tab, which is a passage through which current flows, is formed on the current collector without the slurry being coated on the current collector.

The aligning part (400) may adjust the positions of the first and second electrodes (E1, E2) so that the first boundary area (E13) and the second boundary area (E23) are placed on the same line (C). The position adjustment of the first and second electrodes (E1, E2) may be achieved by the position adjustment of the first and second seating parts (410, 420) to be described below.

For example, the aligning part (400) may comprise a first electrode seating part (410) having a first seating surface (411) on which the connection target region of the first electrode (E1) is seated, a second electrode seating part (420) disposed apart from the first electrode seating part (410) by a predetermined interval (P), and having a second seating surface (421) on which the connection target region of the second electrode (E2) is seated and which is disposed to face the first seating surface (411), and a position adjustment part (430) adjusting the positions of the first and second electrode seating parts (410, 420). The position adjustment part (430) is also referred to as a driving part or a moving part. The position adjustment part (430) may adjust the positions of the first and second electrode seating parts (410, 420) so that the first and second boundary areas (E13, E23) are placed on the same line (C).

The first electrode (E1) is unwound from the first winding roll (110), whereby the connection target region may be seated on the first seating surface (411), and the second electrode (E2) is unwound from the second winding roll (210), whereby the connection target region may be seated on the second seating surface (421). The photographing part (300) is disposed in the interval (P) between the first electrode seating part (410) and the second electrode seating part (420), or between the first seating surface (411) and the second seating surface (421), and may be provided to be movable along the width (W) direction of the electrode. For example, a moving rail (440) on which the photographing part (300) moves may be provided in the interval (P) between the first electrode seating part (410) and the second electrode seating part (420), or between the first seating surface (411) and the second seating surface (421).

The aligning part (400) may check the alignment state of the connection target regions of the first and second electrodes (E1, E2) through the photographed images; when the distortion between the connection target regions of the first and second electrodes (E1, E2), for example, the first boundary area (E13) and the second boundary area (E23) occurs, it may adjust the positions of the first and second electrode seating parts (410, 420) through the position adjustment part (430) and control for the connection target regions of the first and second electrodes (E1, E2), for example, the first boundary area (E13) and the second boundary area (E23) to be aligned; and in the process of connecting the second electrodes (E1, E2), it may accurately connect the electrodes without any distortion therewith, so that it is possible to suppress breakage occurrences, and thus to exhibit excellent operation rates and yields.

In one example, the photographing part (300) may comprise a prism mirror (310) positioned at the interval (P) between the first electrode seating part (410) and the second electrode seating part (420); a first light source part (320) for irradiating the prism mirror (310) with light to irradiate the connection target region of the first electrode (E1) with the reflected light; a second light source part (330) for irradiating the prism mirror with light to irradiate the connection target region of the second electrode (E2) with the reflected light; and a camera (340) simultaneously photographing the connection target regions of the first and second electrodes (E1, E2) irradiated with the reflected light. Since the photographing part (300) according to the present invention can simultaneously check the alignment states of the connection target regions of the first and second electrodes (E1, E2) through the prism mirror (310), it is possible to know the more accurate alignment states. In addition, since different areas can be simultaneously photographed with a single photographing device, there is an advantage of simplifying the equipment.

In addition, the camera (340) may be a vision camera capable of photographing the light refracted by the prism mirror (310), and may perform photographing by a trigger signal. The camera (340) may be disposed at the above-described position to photograph the light refracted by the prism mirror (310), whereby it is possible to accurately check the alignment states of the first and second electrodes (E1, E2).

In one embodiment, the first seating surface (411) comprises a first adsorption area (411A) adsorbing the connection target region of the first electrode (E1) and a non-adsorption area (411B), and the second seating surface (421) comprises a second adsorption area (421A) adsorbing the connection target region of the second electrode (E2), wherein in a state where the first seating surface (411) and the second seating surface (421) are in contact with each other, the non-adsorption area (411B) and the second adsorption area (421A) may be formed at positions corresponding to each other. When the first seating surface (411) has been bisected in the height direction, the first adsorption area (411A) may be located on the upper part and the non-adsorption area (411B) may be located on the lower part. Also, when the second seating surface (421) has been bisected in the height direction, the second adsorption area (421A) may be located on the lower part. The first and second adsorption areas (411A, 421A) may adsorb the connection target regions of the electrodes using an ejector or the like.

In one example, it may comprise a cutting part (600) that when the supply of the first electrode (E1) is exhausted below a certain level, the first electrode (E1) is cut along a preset cutting line to form the connection target region of the first electrode (E1). The cutting line may be formed along the width (W) direction of the electrode. The cutting part (600) may use a knife or laser equipment, and the like, but is not particularly limited. The connection target region of the first electrode (E1) and the connection target region of the second electrode (E2) as cut and formed above may be connected. Meanwhile, the connection target region of the second electrode (E1) may be one pre-cut and formed through a separate cutting device.

In one example, the connection target region of the first electrode (E1) formed after cutting may be adsorbed to the first adsorption area (411A). In the device of the present invention, the connection target regions that the first electrode (E1) and the second electrode (E2) are each cut and formed may be aligned and then connected.

In one example, the cut portion (S) of the adsorbed connection target region of the first electrode (E1) may be positioned in the boundary area between the first adsorption area (411A) and the non-adsorption area (411B) in the first seating surface (411).

The connection target region of the first electrode (E1) located in the first adsorption area (411A) and the connection target region of the second electrode (E2) located in the second adsorption area (421A) may be connected, and in a state where the first seating surface (411) ) and the second seating surface (421) are in contact with each other, it may be advantageous when considering the connectivity between the first and second electrodes (E1, E2) that there is no gap in the boundary area between the connection target region of the first electrode (E1) and the connection target region of the second electrode (E2) which are adjacent to each other if possible.

When the first boundary area (E13) and the second boundary area (E23) are placed on the same line (C), the connection part (500) may move the first and second electrode seating parts (410, 420) so that the first and second seating surfaces (411, 421) come into close contact with each other. The connection part (500) may move the first and second electrode seating parts (410, 420) through the above-described position adjustment part (430), or may move the first and second electrode seating parts (410, 420) through a separate drive part.

In one example, the connection target region of the first electrode (E1) and the connection target region of the second electrode (E2) may be connected via an adhesive member (510) while the first and second seating surfaces (411, 412) come in close contact with each other. The adhesive member (510) may be, for example, a paper tape. For example, when the first and second seating surfaces (411, 412) are in close contact with each other by the connection part (500) in a state where some regions of the adhesive member (510) are bonded to the connection target region of the first electrode (E1) seated on the first seating surface (411), other regions of the adhesive member (510) that are not bonded to the connection target region of the first electrode (E1) are bonded to the connection target region of the second electrode (E2) seated on the second seating surface (421), so that the connection target regions of the first and second electrodes (E1, E2) may be connected to each other.

As another example, when the first and second seating surfaces (411, 412) are in close contact with each other by the connection part (500) in a state where some regions of the adhesive member (510) are bonded to the connection target region of the second electrode (E2) seated on the second seating surface (421), other regions of the adhesive member (510) that are not bonded to the connection target region of the second electrode (E2) are bonded to the connection target region of the first electrode (E1) seated on the first seating surface (411), so that the connection target regions of the first and second electrodes (E1, E2) may be connected to each other.

The first and second electrodes (E1, E2) may be positive electrodes or negative electrodes equally. For example, the first and second electrodes (E1, E2) may be positive electrodes, or the first and second electrodes (E1, E2) may be negative electrodes. As the first and second electrodes (E1, E2) are composed of electrodes having the same polarity, the supply of the first electrode (E1) is exhausted, and then it is possible to be replaceable with the second electrode (E2).

The present application also relates to an electrode connection method. An exemplary electrode connection method uses the above-described electrode connection device. Therefore, to the details of the electrode connection method to be described below, the contents described in the electrode connection device can be applied equally, so that they will be omitted.

The electrode connection method of the present application uses the electrode connection device, and comprises steps of: photographing images of the connection target region of the first electrode (E1) and the connection target region of the second electrode (E2); aligning the connection target region of the first electrode (E1) and the connection target region of the second electrode (E2) based on the photographed images; and connecting the aligned connection target regions of the first and second electrodes (E1, E2).

According to the electrode connection method of the present application, they are accurately aligned without the distortion between the electrodes in the connecting process by photographing the images in advance prior to connecting the connection target regions of the first and second electrodes (E1, E2), and aligning them based on the photographed images, so that the breakage occurrences can be suppressed, and thus excellent operation rates and yields can be exhibited.

### Explanation of Reference Numerals

100: first electrode supply part
200: second electrode supply part
300: photographing part
400: aligning part
500: connection part

## Claims

1. An electrode connection device comprising:
a first electrode supply part supplying a first electrode;
a second electrode supply part supplying a second electrode replacing the first electrode to the first electrode supply part when the supply of the first electrode is exhausted below a certain level;
a photographing part photographing images of a connection target region of the first electrode and a connection target region of the second electrode;
an aligning part aligning the connection target region of the first electrode and the connection target region of the second electrode based on the photographed images; and
a connection part connecting the aligned connection target regions of the first and second electrodes.

2. The electrode connection device according to claim 1, wherein the connection target regions of the first and second electrodes each comprise a patterned portion and an unpatterned portion, and
the photographing part photographs images of a first boundary area between the patterned portion and the unpatterned portion of the first electrode and a second boundary area between the patterned portion and the unpatterned portion of the second electrode.

3. The electrode connection device according to claim 2, wherein the aligning part adjusts the positions of the first and second electrodes so that the first boundary area and the second boundary area are placed on the same line.

4. The electrode connection device according to claim 1, wherein the aligning part comprises:
a first electrode seating part having a first seating surface on which the connection target region of the first electrode is seated;
a second electrode seating part disposed apart from the first electrode seating part by a predetermined interval and having a second seating surface on which the connection target region of the second electrode is seated and which is disposed to face the first seating surface; and
a position adjustment part adjusting positions of the first and second electrode seating parts.

5. The electrode connection device according to claim 1, wherein the photographing part comprises:
a prism mirror positioned in a gap between the first electrode seating part and the second electrode seating part;
a first light source part for irradiating the prism mirror with light to irradiate the connection target region of the first electrode with the reflected light;
a second light source part for irradiating the prism mirror with light to irradiate the connection target region of the second electrode with the reflected light; and
a camera simultaneously photographing the connection target regions of the first and second electrodes irradiated with the reflected light.

6. The electrode connection device according to claim 4, wherein the first seating surface comprises a first adsorption area adsorbing the connection target region of the first electrode and a non-adsorption area, and
the second seating surface comprises a second adsorption area adsorbing the connection target region of the second electrode, wherein
in a state where the first seating surface and the second seating surface are in contact with each other, the non-adsorption area and the second absorption area are formed at positions corresponding to each other.

7. The electrode connection device according to claim 6, comprising a cutting part that when the supply of the first electrode is exhausted below a certain level, the first electrode is cut along a preset cutting line to form the connection target region of the first electrode.

8. The electrode connection device according to claim 7, wherein the connection target region of the first electrode formed after cutting is adsorbed to the first adsorption area.

9. The electrode connection device according to claim 7, wherein the cut portion of the adsorbed connection target region of the first electrode is positioned in the boundary area between the first adsorption area and the non-adsorption area in the first seating surface.

10. The electrode connection device according to claim 4, wherein when the first boundary area and the second boundary area are placed on the same line, the connection part moves the first and second electrode seating parts so that the first and second seating surfaces come into close contact with each other.

11. The electrode connection device according to claim 10, wherein the connection target region of the first electrode and the connection target region of the second electrode are connected via an adhesive member while the first and second seating surfaces come in close contact with each other.

12. The electrode connection device according to claim 1, wherein the first and second electrodes are positive electrodes or negative electrodes equally.

13. An electrode connection method using the electrode connection device of claim 1, wherein the electrode connection method comprises steps of:
photographing images of the connection target region of the first electrode and the connection target region of the second electrode for replacing the first electrode;
aligning the connection target region of the first electrode and the connection target region of the second electrode based on the photographed images; and
connecting the aligned connection target regions of the first and second electrodes.
